# EUROPEAN PATENT SPECIFICATION

(11) **EP 2 489 946 B1**
(45) Date of publication and mention of the grant of the patent: **13.04.2016**
(21) Application number: 12154141.1
(22) Date of filing: 07.02.2012
(51) Int. Cl.: F24D 19/10, F24D 3/18, F24D 3/08, F24F 5/00, F24D 17/02

(54) **Cold/hot water supply apparatus**
Vorrichtung zur Abgabe von kaltem/heißem Wasser
Appareil d'alimentation d'eau chaude/froide

(30) Priority: 16.02.2011 JP 2011030480
(43) Date of publication of application: 22.08.2012
(73) Proprietor: Panasonic Corporation, Kadoma-shi Osaka 571-8501 (JP)
(72) Inventor: ISAYAMA, Yasuhiko, Chuo-ku, Osaka, 540-6207 (JP); AOYAMA, Shigeo, Chuo-ku, Osaka, 540-6207 (JP)
(74) Representative: Eisenführ Speiser

(56) References cited:
- EP-A1- 2 395 302
- WO-A1-2009/142004
- DE-A1- 3 302 901
- DE-A1- 3 332 611
- JP-A- S58 124 132
- JP-A- S58 124 133
- JP-A- S58 124 134

## Description

### [Technical Field]

The present invention relates to a cold/hot water supply apparatus for carrying out air conditioning in an indoor space using a heat pump and for accumulating heat in a heat accumulator tank.

### [Background Technique]

There is a conventionally known cold/hot water supply apparatus having a cooling operation mode for cooling an indoor space and a heat-accumulation operation mode for heating a heat accumulator tank (see patent document 1 for example).

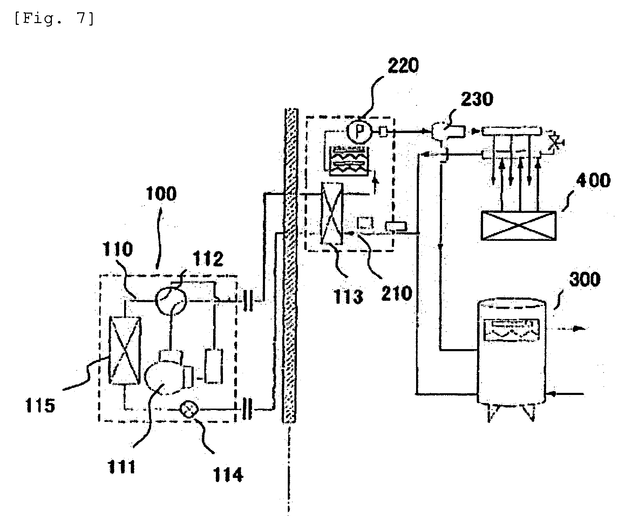

Fig. 7 shows a refrigeration cycle apparatus 100 which carries out an air conditioning operation in an indoor space and accumulates heat in a heat accumulator tank 300.

The refrigeration cycle apparatus 100 includes a refrigerant circuit 110 through which refrigerant circulates, a compressor 111, a four-way valve 112, a first heat exchanger 113, expansion means 114 and a air convection body heat exchanger 115, and these members are annularly connected to one another through pipes.

The first heat exchanger 113 includes a refrigerant circuit 110 and a fluid circuit 210. The fluid circuit 210 includes a first heat exchanger 113, circulation means 220 and a fluid path-switching valve 230. Fluid flowing through the fluid circuit 210 flows to a third heat exchanger 400 or a heat accumulator tank 300 by switching operation of the fluid path-switching valve 230. The third heat exchanger 400 is a fan coil unit having a heat exchanger and a blast fan.

In the case of the cooling operation mode, low temperature fluid is produced in the first heat exchanger 113. This low temperature fluid flows to the third heat exchanger 400 through the fluid path-switching valve 230, absorbs heat from the indoor space by the third heat exchanger 400, cools the indoor space and then, returns into the first heat exchanger 113.

In the case of the heat-accumulation operation mode, the refrigeration cycle apparatus 100 switches the four-way valve 112. According to this, the refrigerant flows in the opposite direction from the cooling operation mode. Therefore, in the case of the heat-accumulation operation mode, high temperature fluid is produced in the first heat exchanger 113. This high temperature fluid flows to the heat accumulator tank 300 through the fluid path-switching valve 230, dissipates heat in the heat accumulator tank 300 and then, returns to the first heat exchanger 113. Hot water heated in the heat accumulator tank 300 is supplied.

The cooling operation mode is switched to the heat-accumulation operation mode and the heat-accumulation operation mode is switched to the cooling operation mode by switching the fluid path-switching valve 230.

The low temperature fluid and the high temperature fluid produced by the first heat exchanger 113 are conveyed by switching the fluid path-switching valve 230.

That is, by switching the fluid path-switching valve 230, fluid which flows out of the first heat exchanger 113 cools an indoor space in the case of the cooling operation mode, and heats water in the heat accumulator tank 300 in the case of the heat-accumulation operation mode.

Moreover, patent document 2 discloses a cold/hot water supply apparatus which comprises: a refrigerant circuit including a compressor, a first heat exchanger, expansion means and a second heat exchanger which are annularly connected to one another and through which refrigerant flows; a fluid circuit including the first heat exchanger, a third heat exchanger and circulation means which are annularly connected to one another and through which fluid flows; a heat accumulator tank in which water is stored; a heat accumulation pipe which is connected to the third heat exchanger in parallel, and which exchanges heat between fluid and water in the heat accumulator tank; and a control apparatus which switches between a flow of the fluid to the third heat exchanger and a flow of the fluid to the heat accumulator tank. The cold/hot water supply apparatus of patent document 2 has a heat-accumulation operation mode and a cooling operation mode, in the heat-accumulation operation mode, the fluid flows to the heat accumulation pipe, thereby heating the water in the heat accumulator tank, and in the cooling operation mode, the fluid flows to the third heat exchanger, thereby absorbing heat in air, wherein the cold/hot water supply apparatus also includes a temperature sensor which detects temperature of the fluid.

### [Prior Art Document]

### [Patent Document]

[Patent Document 1] Specification of EPC Patent Application Publication No.2204620
[Patent Document 2] JP Patent Application No. S58124133

### [Summary of the Invention]

### [Problem to be Solved by the Invention]

According to the conventional configuration, however, when the heat-accumulation operation mode is switched to the cooling operation mode, high temperature fluid accumulated between the first heat exchanger 113 and the fluid path-switching valve 230 flows into the third heat exchanger 400. Therefore, there is a problem that since the high temperature fluid dissipates heat in an indoor space, the temperature in the indoor space rises and comfort in the indoor space is deteriorated.

The present invention has been accomplished to solve the conventional problem, and it is an object of the invention to provide a cold/hot water supply apparatus capable of suppressing temperature rise in an indoor space when the heat-accumulation operation mode is switched to the cooling operation mode, and capable of cooling the indoor space after the heat-accumulation operation mode is switched to the cooling operation mode.

### [Means for Solving the Problem]

To solve the conventional problem, the present invention provides a cold/hot water supply apparatus comprising: a refrigerant circuit including a compressor, a first heat exchanger, expansion means and a second heat exchanger which are annularly connected to one another and through which refrigerant flows; a fluid circuit including the first heat exchanger, a third heat exchanger and circulation means which are annularly connected to one another and through which fluid flows; a heat accumulator tank in which water is stored; a heat accumulation pipe which is connected to the third heat exchanger in parallel, and which exchanges heat between fluid and water in the heat accumulator tank; and a control apparatus which switches between a flow of the fluid to the third heat exchanger and a flow of the fluid to the heat accumulator tank; in which the cold/hot water supply apparatus has a heat-accumulation operation mode and a cooling operation mode, in the heat-accumulation operation mode, the fluid flows to the heat accumulation pipe, thereby heating the water in the heat accumulator tank, and in the cooling operation mode, the fluid flows to the third heat exchanger, thereby absorbing heat in air, wherein the cold/hot water supply apparatus also includes a temperature sensor which detects temperature of the fluid, and if temperature of the fluid detected by the temperature sensor is equal to or higher than predetermined temperature when heat-accumulation operation mode is changed to the cooling operation mode, the control apparatus determines to stop operation of the circulation means or to reduce an operation amount of the circulation means.

### [Effect of the Invention]

According to the present invention, when the heat-accumulation operation mode is switched to the cooling operation mode, it is possible to shorten the hot air blowing time in an indoor space, and to suppress the temperature rise in the indoor space.

### [Brief Description of the Drawings]

Fig. 1 is a schematic explanatory diagram (heat-accumulation operation mode) of a fluid circuit of a cold/hot water supply apparatus according to a first embodiment of the present invention;
Fig. 2 is a schematic explanatory diagram (cooling operation mode) of the fluid circuit of the cold/hot water supply apparatus;
Fig. 3 is a flowchart of a driving operation of the cold/hot water supply apparatus;
Fig. 4 is a schematic explanatory diagram (heat-accumulation operation mode) of a fluid circuit of a cold/hot water supply apparatus according to a second embodiment of the invention;
Fig. 5 is a schematic explanatory diagram (cooling operation mode) of the fluid circuit of the cold/hot water supply apparatus;
Fig. 6 is a flowchart of a driving operation of the cold/hot water supply apparatus; and
Fig. 7 is a schematic block diagram of a conventional cold/hot water supply apparatus.

### [Explanation of Symbols]

- 2: refrigerant circuit
- 4: control apparatus
- 5: fluid circuit
- 10: cold/hot water supply apparatus
- 21: compressor
- 22: first heat exchanger
- 23: expansion means
- 24: second heat exchanger
- 53: third heat exchanger
- 54: circulation means
- 55: heat accumulator tank
- 60: fluid path-switching valve
- 62: heat accumulation pipe
- 70: temperature sensor

### [Mode for Carrying Out the Invention]

According to a first aspect of the invention, the cold/hot water supply apparatus also includes a temperature sensor which detects temperature of the fluid, and if temperature of the fluid detected by the temperature sensor is equal to or higher than predetermined temperature when heat-accumulation operation mode is changed to the cooling operation mode, the control apparatus determines to stop operation of the circulation means or to reduce an operation amount of the circulation means.

According to this, when the heat-accumulation operation mode is changed to the cooling operation mode, it is possible to reduce high temperature fluid which flows into the third heat exchanger, and to shorten the hot air blowing time of the third heat exchanger into the indoor space.

A second aspect of the invention provides a cold/hot water supply apparatus comprising: a refrigerant circuit including a compressor, a first heat exchanger, expansion means and a second heat exchanger which are annularly connected to one another and through which refrigerant flows; a fluid circuit including the first heat exchanger, a third heat exchanger and circulation means which are annularly connected to one another and through which fluid flows; a heat accumulator tank in which water is stored; a heat accumulation pipe which is connected to the third heat exchanger in parallel, and which exchanges heat between fluid and water in the heat accumulator tank; and a control apparatus which switches between a flow of the fluid to the third heat exchanger and a flow of the fluid to the heat accumulator tank; in which the cold/hot water supply apparatus has a heat-accumulation operation mode and a cooling operation mode, in the heat-accumulation operation mode, the fluid flows to the heat accumulation pipe, thereby heating the water in the heat accumulator tank, and in the cooling operation mode, the fluid flows to the third heat exchanger, thereby absorbing heat in air, wherein the cold/hot water supply apparatus also includes a temperature sensor which detects temperature of the fluid, and if temperature of the fluid detected by the temperature sensor is lower than predetermined temperature when heat-accumulation operation mode is changed to the cooling operation mode, the control apparatus determines to flow, to the third heat exchanger, the fluid which flows out of the first heat exchanger.

According to this, low temperature fluid is conveyed to the third heat exchanger. Therefore, when the heat-accumulation operation mode is switched to the cooling operation mode, it is possible to shorten the hot air blowing time of the third heat exchanger into the indoor space.

According to a third aspect, in the cold/hot water supply apparatus of the second aspect, if temperature of the fluid detected by the temperature sensor is equal to or higher than the predetermined temperature, the control apparatus determines to flow, to the heat accumulator tank, the fluid which flows out of the first heat exchanger.

According to this, in a state where the fluid path-switching valve is switched to the heat accumulator tank after the heat-accumulation operation mode is switched to the cooling operation mode, high temperature fluid circulates through the first heat exchanger and the heat accumulator tank. At that time, the fluid is cooled by the first heat exchanger and the fluid temperature is lowered. Thereafter, if the fluid path-switching valve is switched from the heat accumulator tank to the third heat exchanger, fluid whose temperature is lowered flows into the third heat exchanger. Therefore, after the heat-accumulation operation mode is switched to the cooling operation mode, high temperature fluid does not flow into the third heat exchanger. Hence, it is possible to lower the hot air blowing temperature into an indoor space, and to enhance the comfort in the indoor space.

Embodiments of the present invention will be described with reference to the drawings. The invention is not limited to the embodiments.

### (First Embodiment)

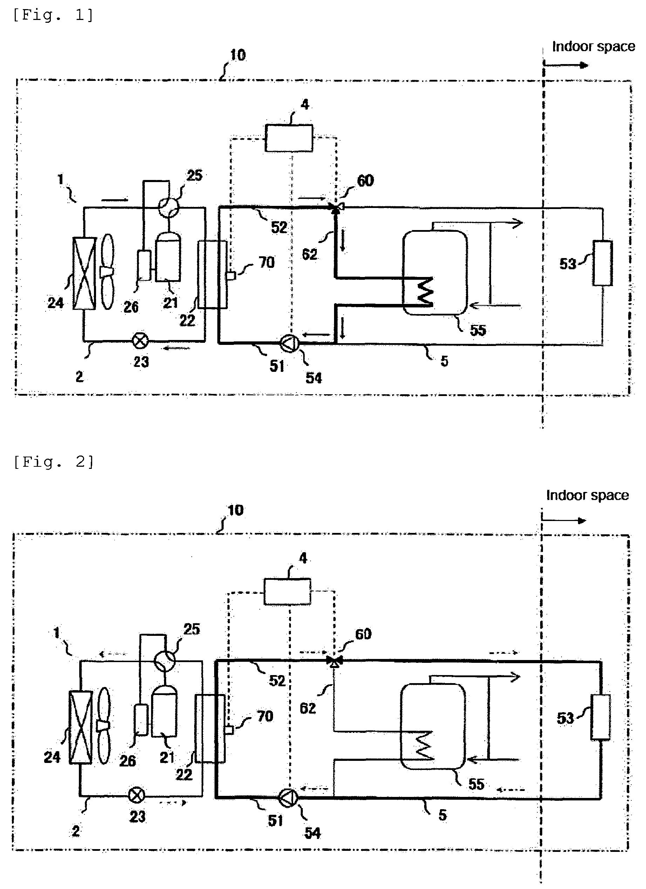

A cold/hot water supply apparatus according to a first embodiment of the present invention will be described using Figs. 1 to 3.

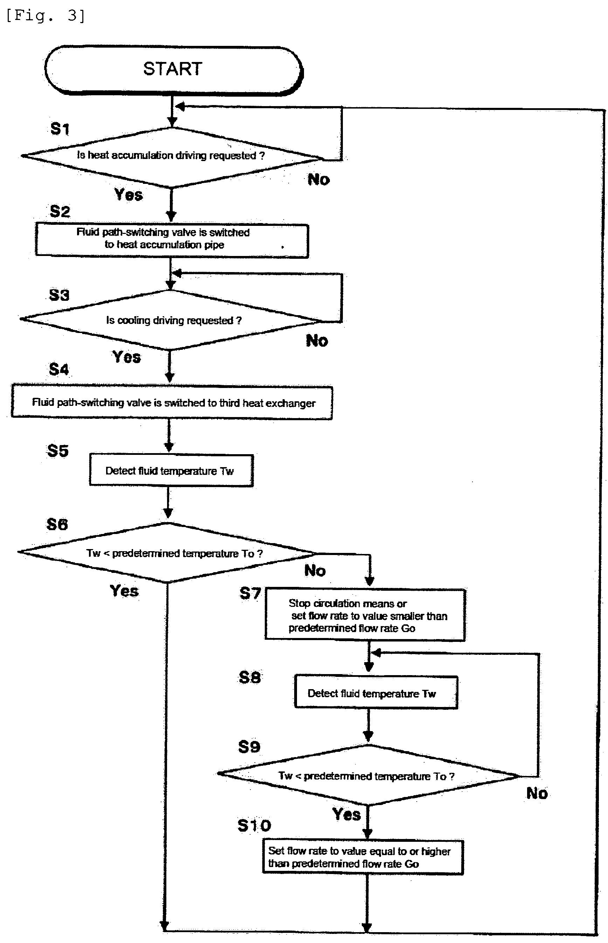

Figs. 1 and 2 are schematic block diagrams of the cold/hot water supply apparatus of the embodiment. Fig. 1 is a schematic block diagram showing a flow of fluid in a heat-accumulation operation mode, Fig. 2 is a schematic block diagram showing a flow of fluid in a cooling operation mode, and Fig. 3 is a flowchart of a driving operation of the cold/hot water supply apparatus of the embodiment.

A configuration of the cold/hot water supply apparatus of the embodiment will be described using Fig. 1.

The cold/hot water supply apparatus 10 includes a refrigeration cycle apparatus 1, a fluid circuit 5, a third heat exchanger 53 and a heat accumulator tank 55.

The refrigeration cycle apparatus 1 includes a refrigerant circuit 2 through which refrigerant circulates. As the refrigerant, it is possible to use pseudo-azeotropic mixture refrigerant such as R410A and single refrigerant such as R32.

The refrigerant circuit 2 includes a compressor 21, a first heat exchanger 22, an expansion means 23 and a second heat exchanger 24 and these members are annularly connected to one another through pipes. The first heat exchanger 22 exchanges heat between refrigerant and fluid. An expansion valve or a capillary tube is used as the expansion means 23. The second heat exchanger 24 exchanges heat between refrigerant and air.

In this embodiment, an accumulator 26 which separates gas and liquid from each other is provided in an inflow side pipe of the compressor 21. In the heat-accumulation operation mode, the heat accumulator tank 55 is heated. In the cooling operation mode, the third heat exchanger 53 absorbs heat. The refrigerant circuit 2 is provided with a four-way valve 25 which switches between the heat-accumulation operation mode and the cooling operation mode.

In this embodiment, the refrigeration cycle apparatus 1 configures a low temperature water producing apparatus. This low temperature water producing apparatus utilizes low temperature fluid produced by the first heat exchanger 22 for absorbing heat by the third heat exchanger 53, and utilizes high temperature fluid produced by the first heat exchanger 22 for heating the heat accumulator tank 55. The first heat exchanger 22 exchanges heat between refrigerant and fluid.

The fluid circuit 5 includes the first heat exchanger 22 and the third heat exchanger 53, and these exchangers are annularly connected to each other through pipes. Fluid flows through the fluid circuit 5. The fluid is water or antifreeze. The third heat exchanger 53 is disposed in an indoor space, and cools and heats the indoor space.

An inflow pipe 51 is a pipe extending from the third heat exchanger 53 to the first heat exchanger 22, and an outflow pipe 52 is a pipe extending from the first heat exchanger 22 to the third heat exchanger 53.

The outflow pipe 52 is provided with a fluid path-switching valve 60. The inflow pipe 51 is provided with circulation means 54.

A heat accumulation pipe 62 branches off from the fluid path-switching valve 60, and is connected to the inflow pipe 51 through the heat accumulator tank 55. That is, the heat accumulation pipe 62 is connected to the third heat exchanger 53 in parallel, and exchanges heat between fluid and water in the heat accumulator tank 55. The heat accumulation pipe 62 and the inflow pipe 51 are connected to each other at a location upstream of the circulation means 54.

A temperature sensor 70 which detects fluid temperature is disposed on the first heat exchanger 22.

A control apparatus 4 inputs a signal from the temperature sensor 70, and controls the fluid path-switching valve 60.

The cold/hot water supply apparatus 10 has the heat-accumulation operation mode, the cooling operation mode and a heating operation mode. In the heat-accumulation operation mode, water in the heat accumulator tank 55 is heated by flowing fluid into the heat accumulation pipe 62. In the cooling operation mode, heat in air is absorbed by flowing fluid into the third heat exchanger 53. In the heating operation mode, heat is dissipated to air by flowing fluid into the third heat exchanger 53.

When the heat-accumulation operation mode is changed to the cooling operation mode, if fluid temperature detected by the temperature sensor 70 is equal to or higher than predetermined temperature, the operation of the circulation means 54 is stopped or its operation amount is reduced. If the fluid temperature detected by the temperature sensor 70 is lower than the predetermined temperature, fluid which flows out of the first heat exchanger 22 flows to the third heat exchanger 53. If the fluid temperature detected by the temperature sensor 70 is equal to or higher than the predetermined temperature, the fluid which flows out of the first heat exchanger 22 flows to the heat accumulator tank 55.

Operation and effect of the cold/hot water supply apparatus having the above-described configuration will be described.

In the heat-accumulation operation mode, high temperature fluid produced by the first heat exchanger 22 heats water in the heat accumulator tank 55. Fig. 1 shows, with arrows, a flow of the fluid in the heat-accumulation operation mode.

The fluid path-switching valve 60 is switched by the control apparatus 4 such that fluid flows to the heat accumulation pipe 62.

High pressure gas refrigerant discharged from the compressor 21 flows into the first heat exchanger 22 through the four-way valve 25, and heats fluid which flows through the first heat exchanger 22.

High pressure liquid refrigerant which flows out of the first heat exchanger 22 is decompressed and expanded by the expansion means 23 and then, the refrigerant flows into the second heat exchanger 24. Low pressure gas-liquid two-phase refrigerant which flows into the second heat exchanger 24 absorbs vaporization heat from air and evaporates, and becomes low pressure two-phase refrigerant or overheated refrigerant and flows out of the second heat exchanger 24.

The low pressure refrigerant which flows out of the second heat exchanger 24 passes through the four-way valve 25, gas and liquid are separated from each other by the accumulator 26, and gas-phase refrigerant is sucked into the compressor 21.

By the above-described operation, high temperature fluid is produced by the first heat exchanger 22.

High temperature fluid produced by the first heat exchanger 22 flows through the outflow pipe 52, and flows into the heat accumulation pipe 62 through the fluid path-switching valve 60. The fluid heats water in the heat accumulator tank 55, flows through the inflow pipe 51 via the circulation means 54, and flows into the first heat exchanger 22 and circulates therethrough.

Fig. 2 shows, with arrows, a flow of fluid in the cooling operation mode.

High pressure refrigerant discharged from the compressor 21 flows into the second heat exchanger 24 through the four-way valve 25, dissipates heat, and condenses. High pressure liquid refrigerant cooled by condensation flows out of the first heat exchanger 22.

High pressure liquid refrigerant which flows out of the second heat exchanger 24 is decompressed by the expansion means 23 and then, it flows into the first heat exchanger 22. Low pressure two-phase refrigerant which flows into the first heat exchanger 22 absorbs vaporization heat from the fluid, evaporates, becomes low pressure two-phase refrigerant or overheated refrigerant, and flows out of the first heat exchanger 22.

Low pressure refrigerant which flows out of the first heat exchanger 22 passes through the four-way valve 25, gas and liquid are separated from each other by the accumulator 26, and gas-phase refrigerant is sucked into the compressor 21.

Low temperature fluid is produced in the first heat exchanger 22 by the above-described operation.

If fluid temperature Tw detected by the temperature sensor 70 is equal to or higher than predetermined temperature To when the heat-accumulation operation mode is changed to the cooling operation mode, the control apparatus 4 determines to stop the circulation means 54 or to set a flow rate to a value smaller than a predetermined flow rate Go, and if the fluid temperature Tw is lower than the predetermined temperature To, the control apparatus 4 sets the circulation means 54 to a value equal to or greater than the predetermined flow rate Go.

In the conventional technique, a merging point between the heat accumulation pipe 62 and the fluid circuit 5, and high temperature fluid in the fluid circuit 5 which connects the first heat exchanger 22 and the fluid path-switching valve 60 with each other are conveyed to the third heat exchanger 53 after the heat-accumulation operation mode is switched to the cooling operation mode but in this embodiment, fluid in the first heat exchanger 22 is conveyed to the third heat exchanger after it is cooled.

Hence, it is possible to prevent high temperature fluid conveyed to the third heat exchanger 53 from flowing into a connecting pipe between an outlet of the first heat exchanger 22 and the fluid path-switching valve 60 immediately after the heat-accumulation operation mode is switched to the cooling operation mode.

Therefore, as compared with the conventional technique, volume of the high temperature fluid conveyed to the third heat exchanger 53 after the heat-accumulation operation mode is switched to the cooling operation mode is reduced.

Here, in the case of an apparatus which carries out the cooling operation mode using cooled fluid, since the predetermined temperature To is set to about 20 degrees Celsius in many cases, the predetermined temperature To is set to 20 degrees Celsius in this embodiment also.

The predetermined flow rate Go is set to a flow rate smaller than that at the time of rating operation, and is set to 1/10 of the rating operation.

The control operation will be described below in detail using the flowchart shown in Fig. 3.

The control apparatus 4 controls the circulation means 54 based on temperature detected by the temperature sensor 70.

First, the control apparatus 4 determines whether heat accumulation driving is requested (step 1). If the heat accumulation driving is not requested, the current state is maintained, and if the heat accumulation driving is requested, the fluid path-switching valve 60 is switched to the heat accumulation pipe 62 (step 2).

High temperature fluid produced by the first heat exchanger 22 flows from the outflow pipe 52 into the heat accumulation pipe 62 by the fluid path-switching valve 60, and water in the heat accumulator tank 55 is heated.

The control apparatus 4 determines whether cooling driving is requested (step 3).

If the cooling driving is not requested, the current state is maintained, and if the cooling driving is requested, the fluid path-switching valve 60 is switched from the heat accumulation pipe 62 to the third heat exchanger 53 (step 4).

Next, the temperature sensor 70 detects the fluid temperature Tw (step 5), and the fluid temperature Tw and the predetermined temperature To are compared with each other (step6).

When the fluid temperature Tw is lower than the predetermined temperature To, it is determined that even if high temperature fluid dissipates heat to the indoor space through the third heat exchanger 53, the possibility that the comfort in the indoor space is deteriorated is low, and the current state is maintained until the heat accumulation driving is requested (step 1).

When the fluid temperature Tw is equal to or higher than the predetermined temperature To, it is determined that if high temperature fluid dissipates heat to the indoor space through the third heat exchanger 53, the possibility that the comfort in the indoor space is deteriorated is high, and the circulation means 54 is stopped or the flow rate is set to a value smaller than the predetermined flow rate Go (step 7). The high temperature fluid in the first heat exchanger 22 is cooled by the first heat exchanger 22.

Thereafter, the temperature sensor 70 in the first heat exchanger 22 detects the fluid temperature Tw (step 8), and compares the fluid temperature Tw and the predetermined temperature To with each other (step 9).

When the fluid temperature Tw is lower than the predetermined temperature To, it is determined that even if high temperature fluid dissipates heat to the indoor space through the third heat exchanger 53, the possibility that the comfort in the indoor space is deteriorated is low, and the circulation means 54 is set to a value equal to or higher than the predetermined flow rate Go (step 10). The current state is maintained until the heat accumulation driving is requested (step 1).

When the fluid temperature Tw is equal to or higher than the predetermined temperature To, it is determined that if high temperature fluid dissipates heat to the indoor space through the third heat exchanger 53, the possibility that the comfort in the indoor space is deteriorated is high, fluid in the first heat exchanger 22 is cooled, and the temperature sensor 70 in the first heat exchanger 22 detects the fluid temperature Tw (step 8).

As described above, in this embodiment, when the heat-accumulation operation mode is switched to the cooling operation mode, if the fluid temperature Tw detected by the temperature sensor 70 is equal to or higher than the predetermined temperature, the circulation means 54 is stopped or the flow rate is set to a value smaller than the predetermined flow rate Go, and when the fluid temperature is lower than the predetermined temperature To, the circulation means 54 sets the flow rate to a value equal to or higher than the predetermined flow rate Go. According to this, the high temperature fluid can stay in the connecting pipe which connects the outlet of the first heat exchanger 22 and the fluid path-switching valve 60 with each other. Therefore, it is possible to reduce the volume of high temperature fluid conveyed to the third heat exchanger 53.

As a result, it is possible to shorten the high temperature hot air blowing time into the indoor space through the third heat exchanger 53 by the high temperature fluid, and it is possible to enhance the comfort in the indoor space.

It is not always necessary to dispose the temperature sensor 70 in the first heat exchanger 22, and the temperature sensor 70 may be disposed in the fluid circuit 5 in the vicinity of a downstream side of the first heat exchanger 22.

### (Second Embodiment)

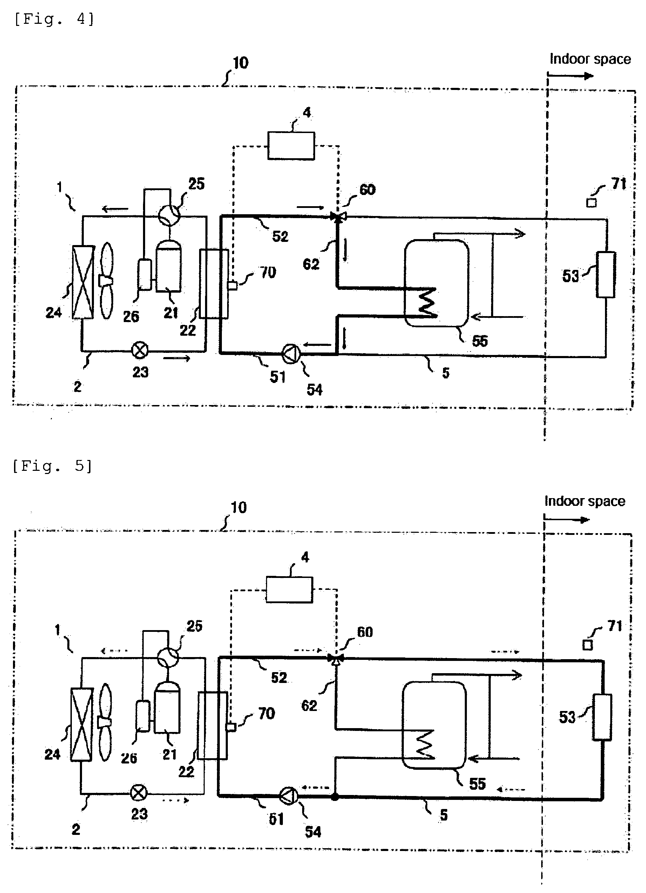

A cold/hot water supply apparatus according to a second embodiment of the invention will be described using Figs. 4 to 6.

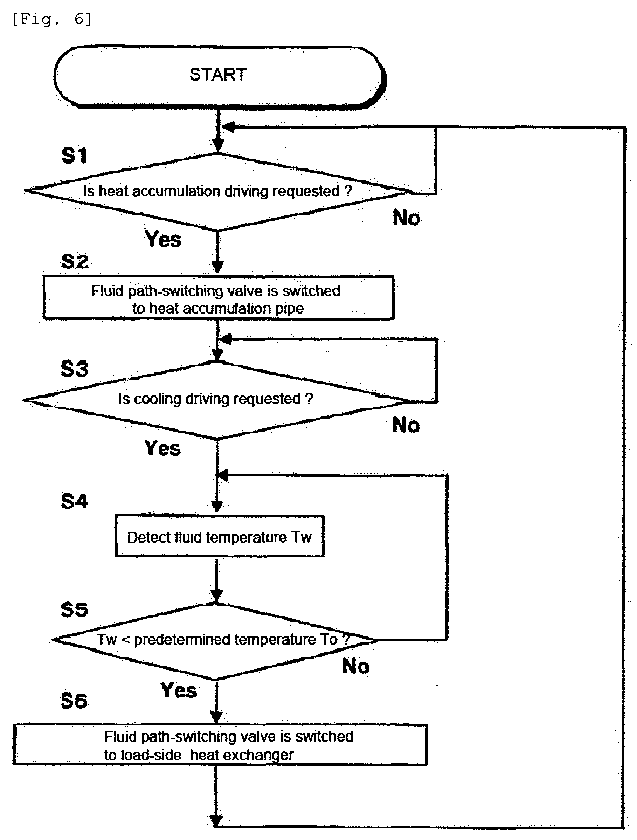

Figs . 4 and 5 are schematic block diagrams of the cold/hot water supply apparatus of the second embodiment, Fig. 4 is a schematic block diagram showing a flow of fluid in a heat-accumulation operation mode, Fig. 5 is a schematic block diagram showing a flow of fluid in a in a cooling operation mode, and Fig. 6 is a flowchart of a driving operation of the cold/hot water supply apparatus of the second embodiment. In the second embodiment, the same constituent parts as those of the first embodiment are designated with the same symbols, and explanation thereof will be omitted.

The basic configuration and operation of the second embodiment are the same as those of the first embodiment, but an air temperature sensor 71 is provided in the second embodiment. That is, the air temperature sensor 71 is provided for detecting air temperature in the indoor space of the first embodiment.

Since the air temperature sensor 71 is provided, the predetermined temperature To is set equal to detection temperature Ta of the air temperature sensor 71 disposed in the indoor space. The predetermined temperature To can be set lower than detection temperature Ta of the air temperature sensor 71 by several degrees, or can be set higher than the detection temperature Ta by several degrees.

As shown in Fig. 5, when the heat-accumulation operation mode is switched to the cooling operation mode, if the fluid temperature Tw detected by the temperature sensor 70 disposed on the first heat exchanger 22 is equal to or higher than the predetermined temperature To, the control apparatus 4 switches the fluid path-switching valve 60 to the heat accumulation pipe 62, and when the fluid temperature Tw is lower than the predetermined temperature To, the control apparatus 4 switches the fluid path-switching valve 60 from the heat accumulation pipe 62 to the third heat exchanger 53.

According to this, after the heat-accumulation operation mode is switched to the cooling operation mode, in a state where the fluid path-switching valve 60 is switched to the heat accumulation pipe 62, the high temperature fluid circulates through the fluid circuit 5, the heat accumulation pipe 62 and the circulation means 54, and is cooled by the first heat exchanger 22 and the fluid temperature is lowered.

Thereafter, when the fluid path-switching valve 60 is switched from the heat accumulation pipe 62 to the third heat exchanger 53, fluid whose temperature becomes lower as compared with the heat-accumulation operation mode flows into the third heat exchanger 53.

The control operation will be described below in detail using the flowchart shown in Fig. 6.

The control apparatus 4 controls the circulation means 54 based on temperature detected by the temperature sensor 70.

First, the control apparatus 4 determines whether heat accumulation driving is requested (step 1). If the heat accumulation driving is not requested, the current state is maintained, and if the heat accumulation driving is requested, the fluid path-switching valve 60 is switched to the heat accumulation pipe 62 (step 2).

Fluid circulates through the first heat exchanger 22, the fluid circuit 5, the fluid path-switching valve 60, the heat accumulation pipe 62 and the circulation means 54, and the fluid heats the heat accumulator tank 55.

The control apparatus 4 determines whether cooling driving is requested (step 3).

If the cooling driving is not requested, the current state is maintained, and if the cooling driving is requested, the temperature sensor 70 in the first heat exchanger 22 detects the fluid temperature Tw (step 4), and compares the fluid temperature Tw and the predetermined temperature To with each other (step 5).

When the fluid temperature Tw is equal to or higher than the predetermined temperature To, it is determined that if the high temperature fluid dissipates heat to the indoor space through the third heat exchanger 53, the possibility that the comfort in the indoor space is deteriorated is high, the current state is maintained, the fluid is kept being cooled, and the temperature sensor 70 in the first heat exchanger 22 detects the fluid temperature Tw (step 4).

When the fluid temperature Tw is lower than the predetermined temperature To, it is determined that even if the high temperature fluid dissipates heat to the indoor space through the third heat exchanger 53, the possibility that the comfort in the indoor space is deteriorated is low, the fluid path-switching valve 60 is switched from the heat accumulation pipe 62 to the third heat exchanger 53 (step 6), and the current state is maintained until the heat accumulation driving is requested (step 1).

As described above, in this embodiment, after the heat-accumulation operation mode is switched to the cooling operation mode, if the fluid temperature detected by the temperature sensor 70 is equal to or higher than the predetermined temperature To, and the fluid path-switching valve 60 is switched to the heat accumulation pipe 62. In this state, the high temperature fluid circulates through the first heat exchanger 22, the fluid circuit 5, the heat accumulation pipe 62 and the circulation means 54, the fluid is cooled by the first heat exchanger 22 and the fluid temperature is lowered.

Thereafter, if the fluid path-switching valve 60 is switched from the heat accumulation pipe 62 to the third heat exchanger 53, fluid whose temperature is lowered as compared with the heat-accumulation operation mode flows into the third heat exchanger 53.

As a result, since the high temperature fluid does not flow into the third heat exchanger 53 after the heat-accumulation operation mode is switched to the cooling operation mode, it is possible to prevent the hot air blowing into the indoor space and to suppress the temperature rise in the indoor space as compared with the conventional technique.

In this case, since the predetermined temperature To of the fluid is set based on the air temperature in the indoor space, if the air temperature in the indoor space is high as compared with a case where the predetermined temperature To shown in the first embodiment is 20 degrees Celsius, the fluid path-switching valve 60 is switched from the heat accumulation pipe 62 to the third heat exchanger 53 when the predetermined temperature To becomes equal to the detection temperature Ta of the air temperature in the room or equal to a value near the detection temperature Ta. Therefore, it is possible to switch from the cooling-standby operation to the cooling operation at an earlier stage than that of the first embodiment.

As a result, it is possible to shorten the cooling-standby time during which fluid circulates through the first heat exchanger 22, the fluid circuit 5, the fluid path-switching valve 60, the heat accumulation pipe 62 and the circulation means 54 as compared with the case of the first embodiment. Therefore, it is possible to enhance the energy efficiency.

Although the fluid path-switching valve 60 is switched based on the fluid temperature Tw detected by the temperature sensor 70 disposed on the first heat exchanger 22, it is also possible to switch the fluid path-switching valve 60 based on a timer which detects time elapsed after the cooling driving is requested instead of the temperature sensor 70.

It is not always necessary to dispose the temperature sensor 70 in the first heat exchanger 22, and the temperature sensor 70 may be disposed in the fluid circuit 5 in the vicinity of downstream side of the first heat exchanger 22.

### [Industrial Applicability]

According to the cold/hot water supply apparatus of the present invention, when the heat-accumulation operation mode is switched to the cooling operation mode, it is possible to suppress the deterioration of comfort in an indoor space in the case of the cooling operation mode. Therefore, the invention can be applied also to a cold water hot water supply heating apparatus which heats fluid and utilizes the fluid for heating an indoor space.

## Claims

1. A cold/hot water supply apparatus (10) comprising: a refrigerant circuit (2) including a compressor (21), a first heat exchanger (22), expansion means (23) and a second heat exchanger (24) which are annularly connected to one another and through which refrigerant flows;
a fluid circuit (5) including the first heat exchanger (22), a third heat exchanger (53) and circulation means (54) which are annularly connected to one another and through which fluid flows;
a heat accumulator tank (55) in which water is stored;
a heat accumulation pipe (62) which is connected to the third heat exchanger (53) in parallel, and which exchanges heat between fluid and water in the heat accumulator tank (55); and
a control apparatus (4) which switches between a flow of the fluid to the third heat exchanger (53) and a flow of the fluid to the heat accumulator tank (55); in which
the cold/hot water supply apparatus (10) has a heat-accumulation operation mode and a cooling operation mode, in the heat-accumulation operation mode, the fluid flows to the heat accumulation pipe (62), thereby heating the water in the heat accumulator tank (55), and in the cooling operation mode, the fluid flows to the third heat exchanger (53), thereby absorbing heat in air, wherein
the cold/hot water supply apparatus (10) also includes a temperature sensor (70) which detects temperature of the fluid,
the control apparatus (4) is configured to control the circulation means (54) based on temperature detected by the temperature sensor (70), and
the control apparatus (4) is configured to stop operation of the circulation means (54) or to reduce an operation amount of the circulation means (54) if temperature of the fluid detected by the temperature sensor (70) is equal to or higher than predetermined temperature when heat-accumulation operation mode is changed to the cooling operation mode.

## Patentansprüche

1. Kalt-/Warmwasserversorgungsgerät (10), umfassend:
einen Kältemittelkreislauf (2) mit einem Kompressor (21), einem ersten Wärmetauscher (22), Expansionsmittel (23) und einem zweiten Wärmetauscher (24), die ringförmig miteinander verbunden sind und durch die Kältemittel strömt;
einen Fluidkreislauf (5), der den ersten Wärmetauscher (22), einen dritten Wärmetauscher (53) und Zirkulationsmittel (54) umfasst, die ringförmig miteinander verbunden sind und durch die Fluid strömt;
ein Wärmespeicherbehälter (55), in dem Wasser gespeichert wird;
ein Wärmespeicherrohr (62), das parallel zu dem dritten Wärmetauscher (53) angeschlossen ist und das Wärme zwischen Fluid und dem Wasser in dem Wärmespeicherbehälter austauscht; und
eine Steuervorrichtung (4), die zwischen einer Strömung des Fluids zu dem dritten Wärmetauscher (53) und einer Strömung des Fluids zu dem Wärmespeicherbehälter (55) schaltet; in welchem
das Kalt-/Warmwasserversorgungsgerät (10) einen Wärmeakkumulationsbetriebsmodus und einem Kühlbetriebsmodus hat, wobei in dem Wärmeakkumulationsbetriebsmodus das Fluid zu dem Wärmespeicherrohr (62) strömt, wodurch das Wasser in dem Wärmespeicherbehälter (55) erhitzt wird, und wobei in dem Kühlbetriebsmodus das Fluid zu dem dritten Wärmetauscher (53) strömt, wodurch Wärme in Luft absorbiert wird, wobei
das Kalt-/Warmwasserversorgungsgerät (10) auch einen Temperatursensor (70) aufweist, der die Temperatur des Fluids erfasst,
die Steuervorrichtung (4) ausgebildet ist, die Zirkulationsmittel (54) basierend auf der vom Temperatursensor (70) erfassten Temperatur zu steuern, und
die Steuervorrichtung (4) ausgebildet ist, den Betrieb der Zirkulationsmittel (54) zu stoppen oder einen Betriebsumfang der Zirkulationsmittel (54) zu drosseln,
wenn die durch den Temperatursensor (70) erfasste Temperatur des Fluids gleich oder höher ist als eine vorbestimmte Temperatur, wenn der Wärmeakkumulationsbetriebsmodus in den Kühlbetriebsmodus geändert wird.

## Revendications

1. Appareil d'alimentation en eau froide/chaude (10), comprenant:
un circuit de réfrigérant (2) comprenant un compresseur (21), un premier échangeur de chaleur (22), des moyens d'expansion (23) et un deuxième échangeur de chaleur (24) qui sont reliés en anneau les uns aux autres et à travers lesquels circule du réfrigérant;
un circuit de fluide (5) comprenant le premier échangeur de chaleur (22), un troisième échangeur de chaleur (53) et des moyens de circulation (54) qui sont reliés en anneau les uns aux autres et à travers lesquels circule du fluide;
un réservoir d'accumulation de chaleur (55) dans lequel est stockée de l'eau;
un tuyau d'accumulation de chaleur (62) qui est connecté en parallèle au troisième échangeur de chaleur (53) et qui échange de la chaleur entre du fluide et l'eau dans le réservoir d'accumulation de chaleur (55); et
un dispositif de commande (4) qui commute entre un écoulement du fluide vers le troisième échangeur de chaleur (53) et un écoulement du fluide vers le réservoir d'accumulation de chaleur (55); dans lequel
ledit appareil d'alimentation en eau froide/chaude (10) a un mode de fonctionnement d'accumulation de chaleur et un mode de fonctionnement de refroidissement, dans ledit mode de fonctionnement d'accumulation de chaleur, le fluide circulant vers le tuyau d'accumulation de chaleur (62), l'eau contenue dans le réservoir d'accumulation de chaleur (55) étant ainsi chauffée, et dans ledit mode de fonctionnement de refroidissement, le fluide circulant vers le troisième échangeur de chaleur (53), de la chaleur étant absorbée ainsi dans de l'air, dans lequel
ledit appareil d'alimentation en eau froide/chaude (10) comprend également un capteur de température (70) qui détecte la température du fluide,
ledit dispositif de commande (4) est configuré pour commander les moyens de circulation (54) sur la base de la température détectée par le capteur de température (70), et
ledit dispositif de commande (4) est configuré pour arrêter le fonctionnement des moyens de circulation (54) ou pour réduire un volume de fonctionnement des moyens de circulation (54), si la température du fluide détectée par le capteur de température (70) est égale ou supérieure à une température prédéterminée, lorsqu'on passe du mode de fonctionnement d'accumulation de chaleur au mode de fonctionnement de refroidissement.
